(19) Europäisches Patentamt
European Patent Office
Office européen des brevets

(11) EP 3 288 994 B1

(12) **EUROPÄISCHE PATENTSCHRIFT**

(45) Veröffentlichungstag und Bekanntmachung des Hinweises auf die Patenterteilung:
**11.03.2020 Patentblatt 2020/11**

(21) Anmeldenummer: **16720395.9**

(22) Anmeldetag: **28.04.2016**

(51) Int Cl.:
*C08G 18/48* (2006.01) *C08G 18/76* (2006.01)
*C08G 18/18* (2006.01) *C08G 18/24* (2006.01)
*C08G 18/42* (2006.01) *C08G 18/44* (2006.01)
*C08G 18/63* (2006.01) *C08G 18/16* (2006.01)
*C08G 18/40* (2006.01) *C08G 101/00* (2006.01)

(86) Internationale Anmeldenummer:
**PCT/EP2016/059470**

(87) Internationale Veröffentlichungsnummer:
**WO 2016/174125 (03.11.2016 Gazette 2016/44)**

(54) **MISCHUNGEN VON POLYETHERCARBONATPOLYOLEN UND POLYETHERPOLYOLEN ZUR HERSTELLUNG VON POLYURETHANWEICHSCHAUMSTOFFEN**

COMPOUNDS OF POLYETHER CARBONATE POLYOLS AND POLYETHER POLYOLS FOR THE MANUFACTURE OF SOFT POLYURETHANE FOAMS

MÉLANGES DE POLYÉTHERCARBONATEPOLYOLS ET DE POLYÉTHERPOLYOLS POUR LA FABRICATION DE MOUSSES SOUPLES EN POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2015 EP 15165791**

(43) Veröffentlichungstag der Anmeldung:
**07.03.2018 Patentblatt 2018/10**

(73) Patentinhaber: **Covestro Deutschland AG**
**51373 Leverkusen (DE)**

(72) Erfinder:
- **LINDNER, Stefan**
  **42857 Remscheid (DE)**
- **HAHN, Norbert**
  **41569 Rommerskirchen (DE)**
- **SCHULZ, Angelika**
  **51373 Leverkusen (DE)**

(74) Vertreter: **Levpat**
**c/o Covestro AG**
**Gebäude 4825**
**51365 Leverkusen (DE)**

(56) Entgegenhaltungen:
**EP-A1- 2 465 890** **EP-A1- 2 730 598**
**WO-A1-2014/072336**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 288 994 B1

## Beschreibung

Die vorliegende Erfindung betrifft ein Verfahren zur Herstellung von Polyurethanweichschaumstoffen, insbesondere von Heißformschäumen, durch Reaktion einer Isocyanat-Komponente mit einer gegenüber Isocyanaten reaktiven Komponente, wobei die gegenüber Isocyanaten reaktive Komponente als Bestandteile ein Polyetherpolyol und ein Polyethercarbonatpolyol umfasst. Die Erfindung betrifft weiterhin durch das erfindungsgemäße Verfahren hergestellte Polyurethanweichschaumstoffe.

WO-A 2008/058913, WO-A 2012/163944, WO-A 2014/072336, WO 2014/074706, sowie die noch nicht veröffentlichte Anmeldung mit der Anmeldenummer EP 13194565.1 beschreiben die Herstellung von Polyurethanweichschaumstoffen aus Polyethercarbonatpolyolen in Mischung mit Polyetherpolyolen.

WO-A 2012/055221 beschreibt die Herstellung eines Polyethercarbonatpolyol-basierten Polyisocyanatprepolymers, welches mit einem Polyether zu einem Weichschaumstoff verschäumt wird.

Im Rahmen einer umweltfreundlichen Ausrichtung von Produktionsprozessen ist es generell wünschenswert, $CO_2$-basierte Ausgangsstoffe in relativ großen Mengen einzusetzen. Die Aufgabe der vorliegenden Erfindung besteht darin, ein Verfahren zur Herstellung von Polyurethanweichschaumstoffen, insbesondere von Heißformschäumen, bereitzustellen, die einen hohen Anteil an Polyethercarbonatpolyolen aufweisen, wobei die Schäume eine höhere Härte und insbesondere eine höhere Zugfestigkeit aufweisen bei gleicher Rohdichte wie vergleichbare Schäume des Standes der Technik.

Überraschenderweise wurde diese Aufgabe gelöst durch ein Verfahren zur Herstellung von Polyurethanweichschaumstoffen, in dem die Isocyanat-reaktive Verbindung eine Mischung von ≥ 10 bis ≤ 90 Gew.-% eines Polyethercarbonatpolyols und ≤ 90 bis ≥ 10 Gew.-% eines speziellen Polyetherpolyols umfasst.

Gegenstand der Erfindung ist daher ein Verfahren zur Herstellung von Polyurethanweichschaumstoffen durch Reaktion einer Isocyanat-Komponente mit einer gegenüber Isocyanaten reaktiven Komponente, wobei die gegenüber Isocyanaten reaktive Komponente die folgenden Bestandteile umfasst:

A) ≥ 10 bis ≤ 90 Gew.-% , vorzugsweise ≥ 20 bis ≤ 80 Gew.-%, besonders bevorzugt ≥ 30 bis ≤ 70 Gew.-% eines Polyethercarbonatpolyols mit einer Hydroxylzahl gemäß DIN 53240 von ≥ 20 mg KOH/g bis ≤ 250 mg KOH/g erhältlich durch Copolymerisation von
≥ 2 Gew.-% bis ≤ 30 Gew.-% Kohlendioxid und ≥ 70 Gew.-% bis ≤ 98 Gew.-% einem oder mehrerer Alkylenoxide in Gegenwart eines oder mehrerer H-funktioneller Startermoleküle mit einer durchschnittlichen Funktionalität von ≥ 1 bis ≤ 6, bevorzugt von ≥ 1 und ≤ 4, besonders bevorzugt ≥ 2 und ≤ 3,

B) ≤ 90 bis ≥ 10 Gew.-%, vorzugsweise ≤ 80 bis ≥ 20 Gew.-%, besonders bevorzugt ≤ 70 bis ≥ 30 Gew.-% eines Polyetherpolyols mit einer Hydroxylzahl gemäß DIN 53240 von ≥ 20 mg KOH/g bis ≤ 250 mg KOH/g, einem Anteil an primären OH-Gruppen von ≥ 20 bis ≤ 80 mol-%, bevorzugt ≥ 30 bis ≤ 60 mol-% bezogen auf die Gesamtzahl primärer und sekundärer OH-Gruppen und einem Anteil an Ethylenoxid von 5 bis 30 Gew.-%, bevorzugt 10 bis 20 Gew.-% bezogen auf die Gesamtmenge an Propylenoxid und Ethylenoxid,
wobei das Polyetherpolyol frei von Carbonateinheiten ist und
durch katalytische Addition von Ethylenoxid und Propylenoxid und gegebenenfalls einem oder mehreren weiteren Alkylenoxiden an eine oder mehrere H-funktionelle Starterverbindungen mit einer Funktionalität von ≥ 2 bis ≤ 6, bevorzugt ≥ 3 bis ≤ 4 erhältlich ist,

C) ≥ 0 bis ≤ 45 Gew.-% , vorzugsweise ≥ 5 bis ≤ 35 Gew.-%, besonders bevorzugt ≥ 10 bis ≤ 30 Gew.-% eines oder mehrerer Polymerpolyole, PHD-Polyole und/oder PIPA-Polyole.

wobei sich die Gesamtmenge aus A), B) und C) zu 100 Gew.-% ergibt.

Es wurde gefunden, dass sich unter Verwendung solcher Polyethercarbonatpolyol/Polyether-Mischungen, die sich durch die spezielle Kombination der Gehalte an Ethylenoxid und an primären OH-Gruppen im Polyether ausweisen, Polyurethanweichschaumstoffen herstellen lassen, die gegenüber Schäumen des Standes der Technik eine vergleichbare Rohdichte und gleichzeitig eine höhere Härte und insbesondere eine deutlich höhere Zugfestigkeit aufweisen.

In keinem der oben gelisteten Dokumente des Standes der Technik ist die Verwendung einer Polyethercarbonatpolyol/Polyether-Mischungen mit solch einem speziellen Polyether offenbart.

Ein weiterer Gegenstand der Erfindung sind die nach dem erfindungsgemäßen Verfahren hergestellten Polyurethanweichschaumstoffe.

Die Herstellung der Polyurethanweichschaumstoffe, bevorzugt PolyurethanweichHeißformschaumstoffe erfolgt nach bekannten Methoden. Die nachfolgend näher beschriebenen Komponenten können zur Herstellung der Polyurethanweichschaumstoffe eingesetzt werden.

Die Komponente A) umfasst ein Polyethercarbonatpolyol mit einer Hydroxylzahl (OH-Zahl) gemäß DIN 53240

von ≥ 20 mg KOH/g bis ≤ 250 mg KOH/g, vorzugsweise von ≥ 20 mg KOH/g bis ≤ 150 mg KOH/g, besonders bevorzugt von ≥ 25 mg KOH/g bis ≤ 90 mg KOH/g, welches erhältlich ist durch Copolymerisation von ≥ 2 Gew.-% bis ≤ 30 Gew.-% Kohlendioxid und ≥ 70 Gew.-% bis ≤ 98 Gew.-% einem oder mehreren Alkylenoxiden, in Gegenwart eines oder mehrerer H-funktioneller Startermoleküle mit einer durchschnittlichen Funktionalität von ≥ 1 bis ≤ 6, bevorzugt von ≥ 1 und ≤ 4, besonders bevorzugt ≥ 2 und ≤ 3, wobei das Polyethercarbonatpolyol keine terminalen Alkylenoxidblöcken aufweist. Unter "H-funktionell" wird im Sinne der Erfindung eine Starterverbindung verstanden, die gegenüber Alkoxylierung aktive H-Atome aufweist.

Vorzugsweise erfolgt die Copolymerisation von Kohlendioxid und einem oder mehreren Alkylenoxiden in Gegenwart mindestens eines DMC-Katalysators (Doppelmetallcyanid-Katalysators).

Vorzugsweise weisen die erfindungsgemäß eingesetzten Polyethercarbonatpolyole zwischen den Carbonatgruppen auch Ethergruppen auf, was in Formel (VIII) schematisch dargestellt wird. In dem Schema gemäß Formel (VIII) steht R für einen organischen Rest wie Alkyl, Alkylaryl oder Aryl, der jeweils auch Heteroatome wie beispielsweise O, S, Si usw. enthalten kann, e und f stehen für eine ganzzahlige Zahl. Das im Schema gemäß Formel (VIII) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (VIII) gezeigte Polyethercarbonatpolyol beschränkt ist. In Bezug auf Formel (VIII) bedeutet dies, dass das Verhältnis von e/f bevorzugt von 2 : 1 bis 1 : 20, besonders bevorzugt von 1,5 : 1 bis 1 : 10 beträgt.

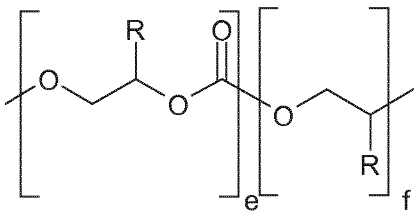
(VIII)

In einer bevorzugten Ausführungsform der Erfindung weist das Polyethercarbonatpolyol A) einen Gehalt an Carbonatgruppen ("aus Kohlendioxid stammenden Einheiten"), berechnet als $CO_2$, von ≥ 2,0 und ≤ 30,0 Gew.-%, bevorzugt von ≥ 5,0 und ≤ 28,0 Gew.-% und besonders bevorzugt von ≥ 10,0 und ≤ 25,0 Gew.-% auf.

Der Anteil an eingebautem $CO_2$ ("aus Kohlendioxid stammende Einheiten") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerat ist von der Firma Bruker, DPX 400, 400 MHz; Pulsprogramm zg30, Wartezeit d1: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:

Cyclisches Carbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Molenanteil des im Polymer eingebauten Carbonats in der Reaktionsmischung wird nach Formel (I) wie folgt berechnet, wobei folgende Abkürzungen verwendet werden:

F(4,5) = Fläche der Resonanz bei 4,5 ppm für cyclisches Carbonat (entspricht einem H Atom)

F(5,1-4,8) = Fläche der Resonanz bei 5,1-4,8 ppm für Polyethercarbonatpolyol und einem H-Atom für cyclisches Carbonat.

F(2,4) = Fläche der Resonanz bei 2,4 ppm für freies, nicht abreagiertes PO

F(1,2-1,0) = Fläche der Resonanz bei 1,2-1,0 ppm für Polyetherpolyol

F(1,6-1,52) = Fläche der Resonanz bei 1,6 bis 1,52 ppm für 1,8 Octandiol (Starter), soweit vorhanden

Unter Berücksichtigung der relativen Intensitäten wurde gemäß der folgenden Formel (I) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \quad \text{(I)}$$

Der Gewichtsanteil (in Gew.-%) polymer-gebundenen Carbonats (LC') in der Reaktionsmischung wurde nach Formel (11) berechnet,

$$LC' = \frac{[F(5{,}1-4{,}8) - F(4{,}5)] * 102}{N} * 100\% \quad \text{(II)}$$

wobei sich der Wert für N ("Nenner" N) nach Formel (III) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \quad \text{(III)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (IV) berechnet,

$$CC' = \frac{F(4{,}5) * 102}{N} * 100\% \quad \text{(IV)}$$

wobei sich der Wert für N nach Formel (III) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Beispielsweise umfasst die Herstellung von Polyethercarbonatpolyolen gemäß A), indem:

($\alpha$) eine H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt wird,

($\beta$) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

(γ) ein oder mehrere der Alkylenoxide und Kohlendioxid zu der aus Schritt (β) resultierenden Mischung zugesetzt werden, wobei die in Schritt (γ) eingesetzten Alkylenoxide gleich oder verschieden sein können von den bei Schritt (β) eingesetzten Alkylenoxiden, und wobei sich nach Schritt (γ) kein weiterer Alkoxylierungsschritt anschließt.

Allgemein können zur Herstellung der Polyethercarbonatpolyole Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxy-propylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid, besonders bevorzugt Propylenoxid eingesetzt.

In einer bevorzugten Ausführungsform der Erfindung liegt der Anteil an Ethylenoxid an der insgesamt eingesetzten Menge an Propylenoxid und Ethylenoxid $\geq 0$ und $\leq 90$ Gew.-%, bevorzugt $\geq 0$ und $\leq 50$ Gew.-% und besonders bevorzugt frei von Ethylenoxid.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und - $CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-l-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielsweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Startern

können auch dreiwertige Alkohole, wie beispielsweise Trimethylolpropan, Glycerin, Trishydroxyethylisocyanurat und Rizinusöl eingesetzt werden.

Die H-funktionellen Startersubstanzen können auch aus der Substanzklasse der Polyetherpolyole ausgewählt sein, insbesondere solchen mit einem Molekulargewicht $M_n$ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht $M_n$ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht $M_n$ von 150 bis 2000 g/mol bevorzugt.

Des weiteren können als H-funktionelle Startersubstanzen Polycarbonatpolyole (wie beispielsweise Polycarbonatdiole) eingesetzt werden, insbesondere solchen mit einem Molekulargewicht $M_n$ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

Ebenfalls können Polyethercarbonatpolyole als H-funktionelle Startersubstanzen eingesetzt werden. Insbesondere werden Polyethercarbonatpolyole, die nach dem oben beschriebenen Verfahren hergestellt werden, eingesetzt. Diese als H-funktionelle Startersubstanzen eingesetzten Polyethercarbonatpolyole werden hierzu in einem separaten Reaktionsschritt zuvor hergestellt.

Bevorzugte H-funktionelle Startersubstanzen sind Alkohole der allgemeinen Formel (V),

$$HO\text{-}(CH_2)_x\text{-}OH \qquad (V)$$

wobei x eine Zahl von 1 bis 20, bevorzugt eine gerade Zahl von 2 bis 20 ist. Beispiele für Alkohole gemäß Formel (V) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (I) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht $M_n$ im Bereich von 62 bis 4500 g/mol und insbesondere ein zahlenmittleres Molekulargewicht $M_n$ im Bereich von 62 bis 3000 g/mol,

ganz besonders bevorzugt ein Molekulargewicht von 62 bis 1500 g/mol. Bevorzugt haben die Polyetherpolyole eine Funktionalität von ≥ 2 bis ≤ 3.

In einer bevorzugten Ausführungsform der Erfindung ist das Polyethercarbonatpolyol durch Anlagerung von Kohlendioxid und Alkylenoxiden an H-funktionelle Startersubstanzen unter Verwendung von Multimetallcyanid-Katalysatoren (DMC-Katalysatoren) erhältlich. Die Herstellung von Polyethercarbonatpolyolen durch Anlagerung von Alkylenoxiden und $CO_2$ an H-funktionelle Starter unter Verwendung von DMC-Katalysatoren ist beispielsweise aus der EP-A 0222453, WO-A 2008/013731 und EP-A 2115032 bekannt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht $M_n$ größer als 500 g/mol enthalten.

Der DMC-Katalysator wird zumeist in einer Menge von ≤ 1 Gew.-%, vorzugsweise in einer Menge von ≤ 0,5 Gew.-%, besonders bevorzugt in einer Menge von ≤ 500 ppm und insbesondere in einer Menge von ≤ 300 ppm, jeweils bezogen auf das Gewicht des Polyethercarbonatpolyols eingesetzt.

Die Komponente B) umfasst Polyetherpolyole mit einer Hydroxylzahl gemäß DIN 53240 von ≥ 20 mg KOH/g bis ≤ 250 mg KOH/g, vorzugsweise von ≥ 20 bis ≤ 112 mg KOH/g und besonders bevorzugt ≥ 20 mg KOH/g bis ≤ 80 mg KOH/g, einem Anteil an primären OH-Gruppen von ≥ 20 bis ≤ 80 mol-%, bevorzugt ≥ 30 bis ≤ 60 mol-% bezogen auf die Gesamtzahl primärer und sekundärer OH-Gruppen und einem Anteil an Ethylenoxid von 5 bis 30 Gew.-%, bevorzugt 10 bis 20 Gew.-% bezogen auf die Gesamtmenge an Propylenoxid und Ethylenoxid und ist frei von Carbonateinheiten. Die Herstellung der Verbindungen gemäß B) kann durch katalytische Addition von Ethylenoxid und Propylenoxid und gegebenenfalls von einem oder mehreren weiteren Alkylenoxiden an eine oder mehrere H-funktionelle Starterverbindungen erfolgen.

Als weitere Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Etlryl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxy-propyltrlisopropoxysilan. Vorzugsweise wird als weiteres Alkylenoxid 1,2 Butylenoxid eingesetzt.

Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von ≥ 2 bis ≤ 6, bevorzugt ≥ 3 bis ≤ 4 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung 1,2-Propylenglykol und /oder Glycerin und/oder Trimethylolpropan und /oder Sorbitol eingesetzt.

Die Komponente C unfasst Polymerpolyole, PHD-Polyole und PIPA-Polyole. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyharnstoffdipsersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol hergestellt durch Alkoxylierung eines trifunktionellen Starters (wie beispielsweise Glycerin

und/oder Trimethylolpropan). Verfahren zur Herstellung von PHD-Dispersionen sind beispielsweise beschrieben in US 4,089,835 und US 4,260,530. Bei den PIPA-Polyolen handelt es sich um durch Polyisocyanat-Polyaddition mit Alkanolaminen-modifizierte Polyetherpolyole, wobei das Polyetherpolyol eine Funktionalität von 2,5 bis 4 und eine Hydroxylzahl von ≥ 3 mg KOH/g bis ≤ 112 mg KOH/g (Molekulargewicht 500 bis 18000) aufweist. PIPA-Polyole sind in GB 2 072 204 A, DE 31 03 757 A1 und US 4 374 209 A eingehend beschrieben.

Geeignete Isocyanat-Komponenten sind unter anderem die technisch leicht zugänglichen Polyisocyanate, zum Beispiel das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Selbstverständlich können weiterhin in der Polyurethanweichschaum-Herstellung übliche Additive wie Stabilisatoren, Katalysatoren etc. mit verwendet werden.

Weitere Aspekte und Ausführungsformen der vorliegenden Erfindung werden nachfolgend beschrieben. Sie können beliebig miteinander kombiniert werden, sofern sich aus dem Zusammenhang nicht eindeutig das Gegenteil ergibt.

In einer Ausführungsform des erfindungsgemäßen Verfahrens beträgt in der gegenüber Isocyanaten reaktiven Komponente der Gesamtanteil an aus Kohlendioxid stammenden Einheiten in den vorhandenen Polyolen ≥ 2,0 Gewichts-% bis ≤ 30,0 Gewichts-%, bezogen auf das Gesamtgewicht der vorhandenen Polyole. Vorzugsweise beträgt dieser Anteil ≥ 5,0 Gewichts-% bis ≤ 25,0 Gewichts-%, besonders bevorzugt ≥ 8,0 Gewichts-% bis ≤ 20,0 Gewichts-%.

Zur Herstellung der Polyurethanweichschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethanweichschaumstoffe können als Formschaumstoffe, z.B. Heißformschaumstoffe hergestellt werden. Gegenstand der Erfindung sind daher ein Verfahren zur Herstellung der Polyurethanweichschaumstoffe, die nach diesen Verfahren hergestellten Polyurethanweichschaumstoffe, die nach diesen Verfahren hergestellten Polyurethanweichformschaumstoffe, die nach diesen Verfahren hergestellten Polyurethanweichheißformschaumstoffe, die Verwendung der Polyurethanweichschaumstoffe zur Herstellung von Formteilen sowie die Formteile selbst. Die nach der Erfindung erhältlichen Polyurethanweichschaumstoffe finden beispielsweise folgende Anwendung: Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelemente. Bevorzugt finden die Polyurethanweichschaumstoffe Anwendung als Automobilsitze.

Bei der Herstellung von Formschäumen im Heißschaumverfahren wird zuerst die Form mit einem Trennmittel vorbereitet und gegebenenfalls Einlegeteile wie Flockenverbundschaum oder Draht eingesetzt. Danach wir die Reaktionsmasse in die Form eingebracht. Die Dosierung und Mischung kann mit Hoch- oder Niederdruckmaschinen erfolgen. Die Rohstoffe werden üblicherweise im Bereich von 15 °C bis 50 °C, bevorzugt zwischen 18 und 30°C und besonders bevorzugt zwischen 20 °C und 24 °C verarbeitet. Die Form hat üblicherweise eine Temperatur zwischen 20 °C und 60 °C, bevorzugt zwischen 25 °C und 50 °C und besonders bevorzugt zwischen 30 °C und 40 °C. Die gefüllte Form wird mit einem Deckel, der Austrittsbohrungen hat, verschlossen und in einem Temperierofen überführt. Die notwendigen Austrittsbohrungen sind zahlreich und ermöglichen, dass überschüssiger Schaum austreten kann. Daher kann nahezu drucklos gearbeitet werden und die Formenverschlüsse sind nur schwach dimensioniert. In dem Öfen wird der Schaum getempert. Der Ofen erhitzt die Form auf eine Forminnenwandtemperatur von 60 °C bis 250 °C, vorzugsweise von 100 bis 140 °C. Nach einer Ausreaktionszeit von beispielsweise 10 bis 15 Minuten wird die Form geöffnet und der Formschaum kann entnommen werden. Die Form wird wieder abgekühlt und der Prozess kann neu gestartet werden. Die industrielle Herstellung von Heißformschäumen erfolgt normalerweise in einem Kreislauf.

In einer weiteren Ausführungsform des erfindungsgemäßen Verfahrens weist der Polyurethanweichschaumstoff eine Stauchhärte (40% Kompression) gemäß DIN EN ISO 1798 von ≥ 0,8 kPa bis ≤ 12,0 kPa, vorzugsweise ≥ 2,0 kPa bis ≤ 8,0 kPa auf.

In einer weiteren Ausführungsform des erfindungsgemäßen Verfahrens beträgt die Kennzahl ≥ 85 bis ≤ 125. Vorzugsweise liegt die Kennzahl in einem Bereich von ≥ 90 bis ≤ 120. Die Kennzahl (Index) gibt das prozentuale Verhältnis der tatsächlich eingesetzten Isocyanat-Menge zur stöchiometrischen, d.h. für die Umsetzung der OH-Äquivalente berechnete Menge an IsocyanatGruppen (NCO)-Menge an.

$$\text{Kennzahl} = [\text{Isocyanat-Menge eingesetzt}) : (\text{Isocyanat-Menge berechnet}) \bullet 100 \qquad (VI)$$

In einer weiteren Ausführungsform des erfindungsgemäßen Verfahrens findet die Reaktion der Isocyanat-Komponente mit der Isocyanat-reaktiven Komponente in Gegenwart eines oder mehrerer Katalysatoren statt. Als Katalysatoren können aliphatische tertiäre Amine (beispielsweise Trimethylamin, Triethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinn(II)-ethylhexanoat, Zinnricinoleat) eingesetzt werden.

In einer weiteren Ausführungsform des erfindungsgemäßen Verfahrens findet die Reaktion in Gegenwart von Wasser als Treibmittel statt. Es ist möglich, dass weitere physikalische oder chemische Treibmittel wie z. B. flüssiges Kohlendioxid oder Dichlormethan anwesend sind.

In einer weiteren Ausführungsform des erfindungsgemäßen Verfahrens umfasst die Isocyanat-Komponente mindestens eine Verbindung ausgewählt aus der Gruppe 2,4-, 2,6-Toluylendiisocyanat (TDI), 4,4'-, 2,4'-, 2,2'-Diphenylmethandiisocyanat und Polyphenylpolymethylenpolyisocyanat ("Mehrkern-MDI"). Bevorzugt ist ein Toluylendiisocyanat-Isomerengemisch aus 80 Gew.-% 2,4- und 20 Gew.-% 2,6-TDI.

In einer weiteren Ausführungsform des erfindungsgemäßen Verfahrens weisen das oder die Polyethercarbonatpolyole gemäß A) eine Hydroxylzahl von $\geq$ 20 mg KOH/g bis $\leq$ 250 mg KOH/g auf und sind erhältlich durch Copolymerisation von $\geq$ 2,0 Gew.-% bis $\leq$ 30,0 Gew.-% Kohlendioxid und $\geq$ 70 Gew.-% bis $\leq$ 98 Gew.-% Propylenoxid in Gegenwart eines hydroxyfunktionellen Startermolekül, wie beispielsweise Trimethylolpropan und/oder Glycerin und/oder Propylenglykol und/oder Sorbitol. Die Hydroxylzahl kann gemäß DIN 53240 bestimmt werden.

In einer weiteren Ausführungsform des erfindungsgemäßen Verfahrens weisen das oder die Polyole gemäß B) eine Hydroxylzahl von $\geq$ 20 mg KOH/g bis $\leq$ 80 mg KOH/g und einen Gehalt an primären OH-Gruppen von $\geq$ 20 bis $\leq$ 80 mol-% bezogen auf die Gesamtzahl primärer und sekundärer OH-Gruppen auf und sind erhältlich durch Copolymerisation von $\geq$ 5 Gew.-% bis $\leq$ 30 Gew.-% Ethylenoxid und $\geq$ 70 Gew.-% bis $\leq$ 95 Gew.-% Propylenoxid in Gegenwart eines hydroxyfunktionellen Startermoleküls, wie beispielsweise Trimethylolpropan und/oder Glycerin und/oder Propylenglykol und/oder Sorbitol. Die Hydroxylzahl kann gemäß DIN 53240 bestimmt werden.

In einer weiteren Ausführungsform betrifft die Erfindung ein Verfahren gemäß einer der vorstehenden Ausführungsformen, wobei das oder die Polyethercarbonatpolyole A) Blöcke gemäß Formel (VIII) mit einem Verhältnis von e/f von 2 : 1 bis 1 : 20 aufweisen.

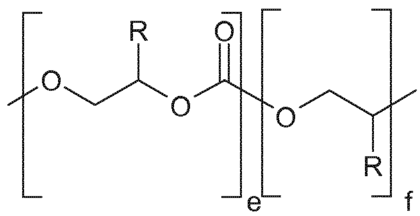

(VIII)

Die vorliegende Erfindung betrifft weiterhin einen Polyurethanweichschaum, welcher durch das erfindungsgemäße Verfahren erhältlich ist. Dessen Rohdichte gemäß DIN EN ISO 3386-1-98 kann im Bereich von $\geq$ 10 kg/$m^3$ bis $\leq$ 150 kg/$m^3$, vorzugsweise im Bereich von $\geq$ 15 kg/$m^3$ bis $\leq$ 60 kg/$m^3$ liegen.

## Beispiele

Die vorliegende Erfindung wird anhand der nachfolgenden Beispiele weiter erläutert werden, ohne jedoch darauf beschränkt zu sein. Es bedeuten:

Polyol A: Polyetherpolyol mit einer OH-Zahl von 56 mg KOH/g, hergestellt in Gegenwart von KOH als Katalysator durch Addition von Propylenoxid und Ethylenoxid unter Verwendung von Glycerin als Starter. Das Polyetherpolyol hat einen Ethylenoxid-Endblock, 45 mol% primären OH-Gruppen und enthält 83% Propylenoxid und 13% Ethylenoxid.

Polyol B: Polyetherpolyol mit einer OH-Zahl von 56 mg KOH/g, hergestellt in Gegenwart von KOH als Katalysator durch Addition von Propylenoxid unter Verwendung von Glycerin als Starter.

Polyol C: Trifunktionelles Polyethercarbonatpolyol auf Basis Glycerin mit Hydroxylzahl 57 mg KOH/g, erhalten durch Copolymerisation von 20 Gew.-% Kohlendioxid mit 80 Gew.-% Propylenoxid.

Polyol D: Arcol® Polyol HS 100 (Polymerpolyol Firma Bayer MaterialScience) ist ein inaktives Polyether Polyol mit einem Styrol-Acrylnitril (SAN) Polymer mit einem Feststoffgehalt von ca. 45 Gew.-% und einer OH-Zahl von ca. 28 mg KOH/g.

B4900: Tegostab® B4900 ist ein Silikonstabilisator für Heißformschaum der Firma Evonik

Niax A1: Niax® catalyst A-1 ist ein Aminkatalysator der Firma Momentive

SO: Dabco® T-9 (Zinn-II-octanoat) ist ein Katalysator der Firma Air Products

T80: Desmodur T80 ist ein Produkt der Firma Bayer MaterialScience AG und besteht aus 2,4- und 2,6-Diisocyanattoluol.

Die Rohdichte wurde gemäß DIN EN ISO 845 bestimmt.
Die Stauchhärte wurde gemäß DIN EN ISO 3386-1 (bei 40% Verformung und 4. Zyklus) bestimmt.
Die Zugfestigkeit und Bruchdehnung wurden bestimmt gemäß DIN EN ISO 1798.
Die Druckverformung wurde gemäß DIN EN ISO 1856 bestimmt.
Die Hydroxylzahl wurde gemäß DIN 53240 bestimmt.
Bestimmung des Anteils an primären OH-Gruppen: mittels $^1$H-NMR (Bruker DPX 400, Deuterochloroform): Zur Bestimmung des Gehaltes an primären OH-Gruppen wurden die Polyol-Proben zunächst peracetyliert.
Dabei wurde folgendes Peracetylierungsgemisch angesetzt:

9,4 g Essigsäureanhydrid p.A.
1,6 g Essigsäure p.A.
100 ml Pyridin p.A.

Für die Peracetylierungsreaktion wurden 10 g Polyol (Polyethercarbonatpolyol oder Polyetherpolyol) in einen 300 ml-Schlifferlenmeyerkolben eingewogen. Das Volumen an Peracetylierungsgemisch richtete sich nach der OH-Zahl des zu peracetylierenden Polyols, wobei (jeweils bezogen auf 10 g Polyol) die OH-Zahl des Polyols aufgerundet wird auf die nächste 10er-Stelle; Pro 10 mg KOH/g werden dann 10 ml an Peracetylierungsgemisch zugesetzt. Beispielsweise wurden der Probe von 10 g eines Polyols mit einer OH-Zahl = 45,1 mg KOH/g entsprechend 50 ml Peracetylierungsgemisch zugesetzt.
Nach der Zugabe von Siedeperlen aus Glas wurde der Schlifferlenmeyerkolben mit einem Steigrohr (Luftkühler) versehen und die Probe 75 min bei schwachem Rückfluss gekocht. Das Probengemisch wurde dann in einen 500 ml-Rundkolben überführt, und über einen Zeitraum von 30 min bei 80°C und 10 mbar (absolut) wurden flüchtige Bestandteile (im wesentlichen Pyridin, Essigsäure und überschüssiges Essigsäureanhydrid) abdestilliert. Der Destillationsrückstand wurde anschließend dreimal mit je 100 ml Cyclohexan (alternativ wurde Toluol eingesetzt in den Fällen, in denen sich der Destillationsrückstand in Cyclohexan nicht löste) versetzt und flüchtige Bestandteile jeweils bei 15 min bei 80 °C und 400 mbar (absolut) entfernt. Anschließend wurden flüchtige Bestandteile der Probe eine Stunde bei 100 °C und 10 mbar (absolut) entfernt.
Zur Bestimmung der molaren Anteile an primären und sekundären OH-Endgruppen im Polyol wurde die so vorbereitete Probe in deuteriertem Chloroform gelöst und mittels $^1$H-NMR (Firma Bruker, DPX 400, 400 MHz, Pulsprogramm zg30, Wartezeit dl: 10s, 64 Scans) untersucht. Die relevanten Resonanzen im $^1$H-NMR (bezogen auf TMS = 0 ppm) sind wie folgt:

Methylsignal einer peracetylierten sekundären OH-Endgruppe: 2,04 ppm
Methylsignal einer peracetylierten primären OH-Endgruppe: 2,07 ppm

Der molare Anteil der sekundären und primären OH-Endgruppen ergibt sich dann wie folgt:

$$\text{Anteil sekundärer OH-Endgruppen (CH-OH)} = F(2{,}04) / (F(2{,}04) + F(2{,}07)) * 100\ \% \qquad (X)$$

$$\text{Anteil primärer OH-Endgruppen (CH2-OH)} = F(2{,}07) / (F(2{,}04) + F(2{,}07)) * 100\ \% \qquad (XI)$$

In den Formeln (X) und (XI) steht F für Fläche der Resonanz bei 2,04 ppm bzw. 2,07 ppm.

Herstellung von Polyurethan-Weichformschaumstoffen

In für die Herstellung von Polyurethan-Weichformschaumstoffen im Heißformschaumverfahren üblicher Verarbeitungsweise nach dem Einstufenverfahren werden die in den Beispielen der in der nachfolgenden Tabelle aufgeführten Einsatzstoffe miteinander zur Reaktion gebracht. Das Reaktionsgemisch wird in eine auf 40 °C geheizte und vorher mit einem Trennmittel (Gorapur LH724-3) bestrichene Metallform eingebracht, mit einem Deckel, der zahlreiche Entlüftungsbohrungen hat, verschlossen und danach für 15 Minuten in einem Trockenschrank bei 140°C gegeben. Die Einsatzmenge der Rohstoffe wurde so gewählt, dass die Form gleichmäßig gefüllt ist.

| POLYOL | Unit | Vergleichs beispiel 1 | Beispiel 2 | Beispiel 3 | Vergleichs beispiel 4 | Vergleichs beispiel 5 | Beispiel 6 | Beispiel 7 |
|---|---|---|---|---|---|---|---|---|
| Polyol A | Tle. | 100 | 50 | 25 | | | 35 | 50 |
| Wasser | Tle. | 3,5 | 3,5 | 3,5 | 3,5 | 3,5 | 3,5 | 3,5 |
| B4900 | Tle. | 1,0 | 1,5 | 2,0 | 1,5 | 1,5 | 1,0 | 1,0 |
| Polyol C | Tle. | 0 | 50 | 75 | 50 | 75 | 35 | 50 |
| Polyol B | | | | | 50 | 75 | | |
| Polyol D | | | | | | | 30 | |
| Niax A1 | Tle. | 0,15 | 0,15 | 0,15 | 0,15 | 0,15 | 0,15 | 0,15 |
| SO | Tle. | 0,10 | 0,14 | 0,14 | 0,20 | 0,20 | 0,14 | 0,1 |
| Isocyanat | | | | | | | | |
| T80 | Tle. | 42,5 | 42,5 | 42,5 | 42,6 | 42,7 | 41,30 | 42,5 |
| VERARBEITUNG | | | | | | | | |
| Kennzahl | | 100 | 100 | 100 | 100 | 100 | 100 | 100 |
| CO2 Anteil Gew.-% im Schaum | | | 7 | 10 | 7 | 10 | 5 | 7 |
| PRÜFERGEBNISSE | | | | | | | | |
| Roh-dichte | kg/m³ | 30,9 | 29,7 | 28,8 | 28,34 | 27,43 | 30,15 | - |
| Stauchhärte CLD 4/40 | kPa | 3,44 | 3,53 | 2,92 | 3,51 | 3,18 | 5,18 | - |
| Zugfestigkeit | kPa | 105 | 119 | 123 | 97 | 85 | 126 | - |
| Bruchdehnung | % | 166 | 179 | 189 | 194 | 155 | 156 | - |
| Druckverformungsrest 50%/22h/70°C | % (ct) | 2,3 | 2,6 | 2,9 | 4,1 | 4,5 | 2,7 | - |
| Druckverformungsrest 75%/22h/70°C | % (ct) | 2,6 | 3,1 | 5 | 7,9 | 8,8 | 5,2 | - |

Tabelle 1

Die erfindungsgemäßen Beispiele 2 und 3, die das Polyethercarbonatpolyol und ein EOhaltiges Polyetherpolyol

enthalten, haben vergleichbare Rohdichten, eine bessere Zugfestigkeit und Bruchdehnung als das Vergleichsbeispiel 1, das kein Polyethercarbonatpolyol enthält. Gegenüber den Vergleichsbeispielen 4 bzw. 5, die das Polyethercarbonatpolyol in Kombination mit einem rein PO-haltigen Polyether enthalten, zeigen die erfindungsgemäßen Beispiele 2 und 3 bei vergleichbarer Rohdichte deutlich bessere Werte bezüglich der Zugfestigkeit und des Druckverformungsrestes (Compression Set),.

Die Katalysator- und Stabilisatormenge wurde angepasst, um vergleichbare Schäume ohne offensichtliche Defekte (z.B. starkes Setzen Rissbildung) zu erhalten. So führt die Katalysator- und Stabilisatormenge aus Vergleichsbeispiel 1 mit der Polyolzusammensetzung aus Beispiel 2 zu einem vertikalen Riss durch den Schaum. Der Versuch ist in Beispiel 7 beschrieben. Durch den Riss konnten keine Mechanischen Eigenschaften bestimmt werden.

## Patentansprüche

1. Verfahren zur Herstellung von Polyurethanweichschaumstoffen durch Reaktion einer Isocyanat-Komponente mit einer gegenüber Isocyanaten reaktiven Komponente, wobei die gegenüber Isocyanaten reaktive Komponente die folgenden Bestandteile umfasst:

   A) ≥ 10 bis ≤ 90 Gew.-% eines Polyethercarbonatpolyols mit einer Hydroxylzahl gemäß DIN 53240 von ≥ 20 mg KOH/g bis ≤ 250 mg KOH/g erhältlich durch Copolymerisation von
   ≥ 2 Gew.-% bis ≤ 30 Gew.-% Kohlendioxid und ≥ 70 Gew.-% bis ≤ 98 Gew.-% einem oder mehrerer Alkylenoxide in Gegenwart eines oder mehrerer H-funktioneller Startermoleküle mit einer durchschnittlichen Funktionalität von ≥ 1 bis ≤ 6,
   B) ≤ 90 bis ≥ 10 Gew.-% eines Polyetherpolyols mit einer Hydroxylzahl gemäß DIN 53240 von ≥ 20 mg KOH/g bis ≤ 250 mg KOH/g, einem Anteil an primären OH-Gruppen von ≥ 20 bis ≤ 80 mol-%, bezogen auf die Gesamtzahl primärer und sekundärer OH-Gruppen und einem Anteil an Ethylenoxid von 5 bis 30 Gew.-%, bezogen auf die Gesamtmenge an Propylenoxid und Ethylenoxid,
   wobei das Polyetherpolyol frei von Carbonateinheiten ist und
   durch katalytische Addition von Ethylenoxid und Propylenoxid und gegebenenfalls einem oder mehreren weiteren Alkylenoxiden an eine oder mehrere H-funktionelle Starterverbindungen mit einer Funktionalität von ≥ 2 bis ≤ 6, erhältlich ist,
   C) ≥ 0 bis ≤ 45 Gew.-% eines oder mehrerer Polymerpolyole, PHD-Polyole und/oder PIPA-Polyole.

   wobei sich die Gesamtmenge aus A), B) und C) zu 100 Gew.-% ergibt.

2. Verfahren gemäß Anspruch 1, wobei das Alkylenoxid/die Alkylenoxide in Komponente A) ausgewählt ist/sind aus der Gruppe bestehend aus Ethylenoxid, Propylenoxid und 1,2 Butylenoxid.

3. Verfahren gemäß einem der Ansprüche 1 oder 2, wobei das Polyethercarbonatpolyol eine Hydroxylzahl von ≥ 20 mg KOH/g bis ≤ 150 mg KOH/g aufweist.

4. Verfahren gemäß einem der Ansprüche 1 bis 3, wobei das Polyetherpolyol in Komponente B einem Anteil an primären OH-Gruppen von ≥ 30 bis ≤ 60 mol-%, bezogen auf die Gesamtzahl primärer und sekundärer OH-Gruppen, aufweist.

5. Verfahren gemäß einem der Ansprüche 1 bis 4, wobei das Polyetherpolyol in Komponente B einem Anteil an Ethylenoxid von 10 bis 20 Gew.-%, bezogen auf die Gesamtmenge an Propylenoxid und Ethylenoxid aufweist.

6. Verfahren gemäß einem der Ansprüche 1 bis 5, wobei das Polyetherpolyol in Komponente B neben Ethylenoxid und Propylenoxid keine weiteren Alkylenoxide enthält.

7. Verfahren gemäß einem der Ansprüche 1 bis 6, wobei das Polyetherpolyol in Komponente B eine Hydroxylzahl von ≥ 20 mg KOH/g bis ≤ 112 mg KOH/g aufweist.

8. Verfahren gemäß einem der Ansprüche 1 bis 7, wobei in der gegenüber Isocyanaten reaktive Komponente ≥ 20 bis ≤ 80 Gew.-% A) und ≤ 80 bis ≥ 20 Gew.-% B) enthalten sind.

9. Verfahren gemäß einem der Ansprüche 1 bis 8, wobei in der gegenüber Isocyanaten reaktive Komponente ≥ 30 bis ≤ 70 A) und ≤ 70 bis ≥ 30 Gew.-% B) enthalten sind.

**10.** Verfahren gemäß einem der Ansprüche 1 bis 9, wobei in der gegenüber Isocyanaten reaktive Komponente ≥5 bis ≤ 35 Gew.-% C enthalten sind.

**11.** Verfahren gemäß einem der Ansprüche 1 bis 10, wobei die Isocyanat-Komponente 2,4-, 2,6-Toluylendiisocyanat (TDI), 4,4'-, 2,4'-, 2,2'-Diphenylmethandiisocyanat (MDI) und/oder Polyphenylpolymethylenpolyisocyanat ("Mehrkern-MDI") umfasst.

**12.** Verfahren gemäß einem der Ansprüche 1 bis 11, wobei das Polyethercarbonatpolyol (A) Blöcke gemäß Formel (VIII) mit einem Verhältnis e/f von 2:1 bis 1:20 aufweist.

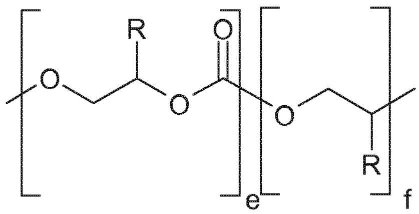

(VIII)

**13.** Polyurethanweichschaum, erhältlich durch ein Verfahren gemäß einem oder mehreren der Ansprüche 1 bis 12.

**14.** Polyurethanweichschaum gemäß Anspruch 13, wobei es sich um einen Heißformschaum handelt.

**15.** Verwendung des Polyurethanweichschaums gemäß Anspruch 13 oder 14 zur Herstellung von Möbelpolsterungen, Textileinlagen, Matratzen, Automobilsitzen, Kopfstützen, Armlehnen, Schwämmen, Schaumstofffolien zur Verwendung in Automobilteilen wie beispielsweise Dachhimmeln, Türseitenverkleidungen, Sitzauflagen und Bauelementen, wobei die Verwendung zur Herstellung von Automobilsitzen bevorzugt ist.

## Claims

**1.** Process for producing flexible polyurethane foams by reaction of an isocyanate component with a component reactive toward isocyanates, wherein the component reactive toward isocyanates comprises the following constituents:

A) ≥ 10 to ≤ 90% by weight of a polyether carbonate polyol having a hydroxyl number conforming to DIN 53240 of ≥ 20 mg KOH/g to ≤ 250 mg KOH/g, obtainable by copolymerization of
≥ 2% by weight to ≤ 30% by weight of carbon dioxide and ≥ 70% by weight to ≤ 98% by weight of one or more alkylene oxides,
in the presence of one or more H-functional starter molecules having an average functionality of ≥ 1 to ≤ 6,
B) ≤ 90 to ≥ 10% by weight of a polyether polyol having a hydroxyl number conforming to DIN 53240 of ≥ 20 mg KOH/g to ≤ 250 mg KOH/g, a proportion of primary OH groups of ≥ 20 to ≤ 80 mol %, based on the total number of primary and secondary OH groups, and a proportion of ethylene oxide of 5% to 30% by weight, based on the total amount of propylene oxide and ethylene oxide,
the polyether polyol being free of carbonate units and
by catalytic addition of ethylene oxide and propylene oxide and optionally one or more further alkylene oxides onto one or more H-functional starter compounds having a functionality of ≥ 2 to ≤ 6,
C) ≥ 0 to ≤ 45% by weight of one or more polymer polyols, PHD polyols and/or PIPA polyols, wherein the total amount of A), B) and C) adds up to 100% by weight.

**2.** Process according to Claim 1, wherein the alkylene oxide/the alkylene oxides in component A) is/are selected from the group consisting of ethylene oxide, propylene oxide and 1,2-butylene oxide.

**3.** Process according to either of Claims 1 and 2, wherein the polyether carbonate polyol has a hydroxyl number of ≥ 20 mg KOH/g to ≤ 150 mg KOH/g.

**4.** Process according to any of Claims 1 to 3, wherein the polyether polyol in component B has a proportion of primary OH groups of ≥ 30 to ≤ 60 mol %, based on the total number of primary and secondary OH groups.

**5.** Process according to any of Claims 1 to 4, wherein the polyether polyol in component B has a proportion of ethylene

oxide of 10 to 20% by weight, based on the total amount of propylene oxide and ethylene oxide.

**6.** Process according to any of Claims 1 to 5, wherein the polyether polyol in component B contains no other alkylene oxides apart from ethylene oxide and propylene oxide.

**7.** Process according to any of Claims 1 to 6, wherein the polyether polyol in component B has a hydroxyl number of ≥ 20 mg KOH/g to ≤ 112 mg KOH/g.

**8.** Process according to any of Claims 1 to 7, wherein the component reactive toward isocyanates includes ≥ 20 to ≤ 80% by weight of A) and ≤ 80 to ≥ 20% by weight of B).

**9.** Process according to any of Claims 1 to 8, wherein the component reactive toward isocyanates includes ≥ 30 to ≤ 70 of A) and ≤ 70 to ≥ 30% by weight of B).

**10.** Process according to any of Claims 1 to 9, wherein the component reactive toward isocyanates includes ≥ 5 to ≤ 35% by weight of C.

**11.** Process according to any of Claims 1 to 10, wherein the isocyanate component comprises tolylene 2,4-, 2,6-diisocyanate (TDI), diphenylmethane 4,4'-, 2,4'-, 2,2'-diisocyanate (MDI) and/or polyphenyl polymethylene polyisocyanate ("polycyclic MDI").

**12.** Process according to any of Claims 1 to 11, wherein the polyether carbonate polyol (A) includes blocks of formula (VIII) having an e/f ratio of 2:1 to 1:20.

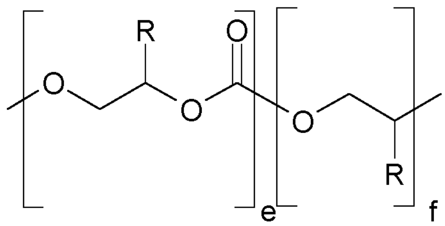

(VIII)

**13.** Flexible polyurethane foam obtainable by a process according to one or more of Claims 1 to 12.

**14.** Flexible polyurethane foam according to Claim 13, which is a hot-moulded foam.

**15.** Use of the flexible polyurethane foam according to Claim 13 or 14 for production of furniture cushioning, textile inserts, mattresses, automobile seats, headrests, armrests, sponges, foam films for use in automobile components, for example inner roof linings, door trim, seat covers and structural components, preference being given to use for production of automobile seats.

**Revendications**

**1.** Procédé de fabrication de mousses souples de polyuréthane par réaction d'un composant isocyanate avec un composant réactif avec les isocyanates, le composant réactif avec les isocyanates comprenant les constituants suivants :

A) ≥ 10 à ≤ 90 % en poids d'un polyéther-carbonate-polyol ayant un indice hydroxyle selon DIN 53240 de ≥ 20 mg de KOH/g à ≤ 250 mg de KOH/g, pouvant être obtenu par copolymérisation de :

≥ 2 % en poids à ≤ 30 % en poids de dioxyde de carbone et ≥ 70 % en poids à ≤ 98 % en poids d'un ou de plusieurs oxydes d'alkylène,
en présence d'une ou de plusieurs molécules de départ à fonction H ayant une fonctionnalité moyenne de ≥ 1 à ≤ 6,

B) ≤ 90 à ≥ 10 % en poids d'un polyéther-polyol ayant un indice hydroxyle selon DIN 53240 de ≥ 20 mg de

KOH/g à ≤ 250 mg de KOH/g, une proportion de groupes OH primaires de ≥ 20 à ≤ 80 % en moles, par rapport au nombre total de groupes OH primaires et secondaires, et une proportion d'oxyde d'éthylène de 5 à 30 % en poids, par rapport à la quantité totale d'oxyde de propylène et d'oxyde d'éthylène,
le polyéther-polyol étant exempt d'unités carbonate, et pouvant être obtenu par addition catalytique d'oxyde d'éthylène et d'oxyde de propylène et éventuellement d'un ou de plusieurs oxydes d'alkylène supplémentaires sur un ou plusieurs composés de départ à fonction H ayant une fonctionnalité de ≥ 2 à ≤ 6,
C) ≥ 0 à ≤ 45 % en poids d'un ou de plusieurs polyols polymères, PHD-polyols et/ou PIPA-polyols,

la quantité totale de A), B) et C) étant de 100 % en poids.

2. Procédé selon la revendication 1, dans lequel l'oxyde d'alkylène ou les oxydes d'alkylène dans le composant A) sont choisis dans le groupe constitué par l'oxyde d'éthylène, l'oxyde de propylène et l'oxyde de 1,2-butylène.

3. Procédé selon l'une quelconque des revendications 1 ou 2, dans lequel le polyéther-carbonate-polyol présente un indice hydroxyle de ≥ 20 mg de KOH/g à ≤ 150 mg de KOH/g.

4. Procédé selon l'une quelconque des revendications 1 à 3, dans lequel le polyéther-polyol dans le composant B présente une proportion de groupes OH primaires de ≥ 30 à ≤ 60 % en moles, par rapport au nombre total de groupes OH primaires et secondaires.

5. Procédé selon l'une quelconque des revendications 1 à 4, dans lequel le polyéther-polyol dans le composant B présente une proportion d'oxyde d'éthylène de 10 à 20 % en poids, par rapport à la quantité totale d'oxyde de propylène et d'oxyde d'éthylène.

6. Procédé selon l'une quelconque des revendications 1 à 5, dans lequel le polyéther-polyol dans le composant B ne contient pas d'oxydes d'alkylène supplémentaires en plus de l'oxyde d'éthylène et de l'oxyde de propylène.

7. Procédé selon l'une quelconque des revendications 1 à 6, dans lequel le polyéther-polyol dans le composant B présente un indice hydroxyle de ≥ 20 mg de KOH/g à ≤ 112 mg de KOH/g.

8. Procédé selon l'une quelconque des revendications 1 à 7, dans lequel ≥ 20 à ≤ 80 % en poids de A) et ≤ 80 à ≥ 20 % en poids de B) sont contenus dans le composant réactif avec les isocyanates.

9. Procédé selon l'une quelconque des revendications 1 à 8, dans lequel ≥ 30 à ≤ 70 de A) et ≤ 70 à ≥ 30 % en poids de B) sont contenus dans le composant réactif avec les isocyanates.

10. Procédé selon l'une quelconque des revendications 1 à 9, dans lequel ≥ 5 à ≤ 35 % en poids de C est contenu dans le composant réactif avec les isocyanates.

11. Procédé selon l'une quelconque des revendications 1 à 10, dans lequel le composant isocyanate comprend du diisocyanate de 2,4-, 2,6-toluylène (TDI), du diisocyanate de 4,4'-, 2,4'-, 2,2'-diphénylméthane (MDI) et/ou du polyisocyanate de polyphénylpolyméthylène (« MDI polynucléaire »).

12. Procédé selon l'une quelconque des revendications 1 à 11, dans lequel le polyéther-carbonate-polyol (A) comprend des séquences selon la formule (VIII) avec un rapport e/f de 2:1 à 1:20

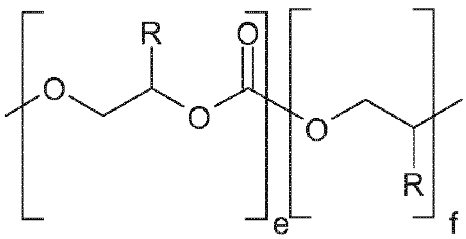

(VIII)

13. Mousse souple de polyuréthane, pouvant être obtenue par un procédé selon une ou plusieurs des revendications 1 à 12.

**14.** Mousse souple de polyuréthane selon la revendication 13, qui consiste en une mousse moulée à chaud.

**15.** Utilisation de la mousse souple de polyuréthane selon la revendication 13 ou 14 pour la fabrication de rembourrages de meubles, de garnitures textiles, de matelas, de sièges automobiles, d'appuie-tête, d'accoudoirs, d'éponges, de feuilles en mousse destinées à une utilisation dans des pièces automobiles, telles que par exemple des pavillons, des habillages latéraux de portes, des éléments d'assise de sièges et des éléments de construction, l'utilisation pour la fabrication de sièges automobiles étant préférée.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008058913 A
- WO 2012163944 A
- WO 2014072336 A
- WO 2014074706 A
- EP 13194565
- WO 2012055221 A
- EP 1359177 A
- EP 0222453 A
- WO 2008013731 A
- EP 2115032 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- US 4089835 A
- US 4260530 A
- GB 2072204 A
- DE 3103757 A1
- US 4374209 A
- EP 355000 A
- EP 0176013 A


### In der Beschreibung aufgeführte Nicht-Patentliteratur


- Kunststoff-Handbuch. Carl-Hanser-Verlag, 1993, vol. VII, 139-265